# EUROPÄISCHE PATENTSCHRIFT

(11) **EP 2 747 865 B1**
(45) Veröffentlichungstag und Bekanntmachung des Hinweises auf die Patenterteilung: **18.01.2017**
(21) Anmeldenummer: 12753689.4
(22) Anmeldetag: 23.08.2012
(51) Int. Cl.: B01D 25/21, B01D 25/28

(54) **FILTERPLATTE FÜR EINE FILTERPRESSE**
FILTER PLATE FOR A FILTER PRESS
PLAQUE FILTRANTE POUR UN FILTRE-PRESSE

(30) Priorität: 25.08.2011 DE 202011104970 U
(43) Veröffentlichungstag der Anmeldung: 02.07.2014
(73) Patentinhaber: JVK Filtration Systems GmbH, 91166 Georgensgmünd (DE)
(72) Erfinder: HERMANN, Manfred P., 90491 Nürnberg (DE)
(74) Vertreter: Reitstötter Kinzebach
(86) Internationale Anmeldenummer: PCT/EP2012/066380
(87) Internationale Veröffentlichungsnummer: WO 2013/026893

(56) Entgegenhaltungen:
- DE-U1-202009 014 692
- DE-U1-202010 006 311

## Beschreibung

Die vorliegende Erfindung betrifft eine Filterplatte für eine Filterpresse mit einem Grundkörper und einer Membran, bei der randseitig ein Befestigungselement ausgebildet ist, mittels welchem die Membran nicht-lösbar mittels einer Schweißverbindung an dem Grundkörper befestigt ist. Bei der Filterplatte handelt es sich somit um eine so genannte Membranfilterplatte.

Es ist bekannt, für eine Filterpresse ein Filterpaket zu bilden, welches aus mehreren paarweise nebeneinander angeordneten Filterplatten besteht. Zwischen den Filterplatten werden jeweils Filterkammern gebildet. Die Filterplatten weisen hierfür eine zentrale Filterfläche und einen die zentrale Filterfläche umrahmenden dickeren Dichtrand auf. In der Filterpresse können die Filterplatten voneinander weg und aufeinander zu verfahren werden, wodurch die Filterkammern geöffnet und geschlossen werden können.

Jede Filterkammer weist üblicherweise zumindest einen Einlauf und einen Auslauf auf. Über den Einlauf fließt die zu filternde Suspension, welche üblicherweise als Trübe bezeichnet wird, in die Filterkammer hinein. Die Suspension wird dann mittels eines Filtertuchs gefiltert, wobei die Feststoffe durch das Filtertuch in der Filterkammer zurückgehalten werden, so dass ein sogenannter Filterkuchen entsteht. Das von den Festkörpern befreite Filtrat wird über den Auslauf aus der Filterkammer herausgeleitet.

Die DE 20 2009 014 692 U1 beschreibt eine Filterplatte mit einem Grundkörper und einem elastischen Element, welches ringartig und flüssigkeitsdicht an dem Grundkörper befestigt ist. An dem elastischen Element ist eine Temperierplatte befestigt. Mittels der Temperierplatte kann bei einem Einsatz der Filterplatte in einer Filterpresse der Filterkuchen temperiert werden. Da die Temperierplatte über das elastische Element an dem Grundkörper befestigt ist, kann sich die Temperierplatte bei Temperaturveränderungen unabhängig von dem Grundkörper frei ausdehnen bzw. zusammenziehen. Die Veränderungen der Geometrie der Temperierplatte und/oder des Grundkörpers werden vollständig von dem elastischen Element ausgeglichen. Das elastische Element ist mittels einer Schnappverbindung, einer Schraubverbindung oder einer Schweißverbindung an dem Grundkörper befestigt.

Um die Restfeuchte im Filterkuchen zu reduzieren und die Filtrationszeiten zu verkürzen, sind Filterpressen bekannt, bei denen zumindest eine Filterkammer einer Filterplatte eine Membran aufweist. Eine solche Filterplatte bezeichnet man als Membranfilterplatte. Bei einer Filterpresse mit Membranfilterplatten schließt sich an die zunächst durchgeführte Druckfiltration eine Pressfiltration an, bei der die elastischen Membranen der Filterkammern mit einem Druckmedium beaufschlagt werden, so dass sie den Raum, in welchem sich der Filterkuchen befindet, verengen. Auf diese Weise wird der Filterkuchen komprimiert, wodurch die Hohlräume des Filterkuchens verkleinert werden und dadurch die Restfeuchte in diesen Hohlräumen weiter verringert wird.

Eine solche Filterpresse ist beispielsweise in der WO 03/095063 A1 beschrieben. Bei der dort beschriebenen Filterpresse wird ein Plattenpaket gebildet, welches abwechselnd eine Filterplatte und eine Membranfilterplatte aufweist. Die Filterplatte weist auf beiden Seiten jeweils ein Filtertuch auf, welches jeweils in einer Aussparung des Grundkörpers der Filterplatte befestigt ist. Die Membranfilterplatte weist auf beiden Seiten jeweils eine Membran auf, welche lösbar an dem Grundkörper befestigt ist. Bei geöffneter Filterpresse kann die Membran somit ausgetauscht werden. Bei geschlossener Filterpresse wird die Membran ausschließlich durch die Pressenschließkraft der gegenüberliegenden Filterplatte gehalten.

Eine weitere Filterplatte mit einer lösbar befestigten Membran ist aus der WO 2006/114235 A1 bekannt. Die austauschbare Membran wird in diesem Fall mit Hilfe einer Nut-Feder-Verbindung an dem Grundkörper fixiert.

Bei Filterplatten mit einer austauschbaren, d. h. lösbar an den Grundkörper befestigten Membran ergibt sich das Problem, dass bei sehr hohen Filterdrücken von beispielsweise über 30 bar die Verbindung zwischen der Membran und dem Grundkörper im Betrieb der Filterpresse undicht werden kann. Außerdem kann es passieren, dass sich die Membran vollständig von dem Grundkörper löst. Des Weiteren ist der Einsatz von Filterplatten mit austauschbaren Membranen bei Anwendungen nachteilig, bei denen es erforderlich ist, die Filterplatte nach einer Verwendung zu sterilisieren. Bei einer Filterplatte mit einer austauschbaren Membran können bei den Aussparungen für die Aufnahme der Membran nämlich Bereiche entstehen, die nicht sterilisierbar sind.

Außerdem sind Filterplatten bekannt, bei denen die Membran nicht-lösbar an dem Grundkörper befestigt ist. In diesem Fall ist die Membran somit nicht austauschbar. Solche Filterplatten werden auch als fugenfrei bezeichnet. Sie besitzen den Vorteil, dass sie besonders leicht zu säubern sind.

Aus der DE 37 01 862 A1 ist eine Filterplatte mit einer nicht-lösbar an einem Grundkörper befestigten Membran bekannt. Die Filterplatte umfasst eine Stützwand, einen Plattenrahmen und eine so genannte flexible Presswand. Die Presswand ist einstückig mit dem Plattenrahmen ausgebildet und schließt an diesen im Randbereich der Filterkammer bzw. der Druckkammer an. Der starre Plattenrahmen besteht aus einem dem Schließdruck der Filterpresse standhaltenden harten Kunststoffs, während die Presswand aus einem elastischen Kunststoff besteht. Der harte und der elastische Kunststoff bilden in einem Übergangsbereich zwischen dem Plattenrahmen und der Presswand eine copolymere Phase. Für die Herstellung des Plattenrahmens mit der Presswand wird ein Pressverfahren vorgeschlagen, bei dem der schon gefertigte Plattenrahmen in die Pressform eingelegt und der elastische Kunststoff für die Presswand in Granulatform der Pressform zugegeben wird. In dem anschließenden Pressvorgang werden unter Wärmeeinwirkung dann das Granulat unter sich sowie mit dem Plattenrahmen verpresst.

Schließlich ist aus der DE 199 43 584 C2 eine weitere Filterplatte mit einer nicht-lösbar befestigten Membran bekannt. Bei dieser Filterplatte ist eine starre Stützwand einstückig mit einem starren Plattenrahmen ausgebildet. Die Membran weist eine Randleiste auf und ist mit dieser auf die Stützwand aufgeschweißt.

Aus der DE 20 2010 006 311 U1 ist eine Filterplatte für eine Filterpresse mit einer Öffnung zum Ein- oder Auslauf eines Fluids und einer ersten Aussparung zum Befestigen eines Filtertuchs bekannt. Auf der von der ersten Seite abgewandten Seite ist bei dieser Filterplatte eine Membran befestigt. Auf diese Weise wird eine sogenannte Hybridplatte bereitgestellt, die sowohl ein Filtertuch als auch eine Membran aufnimmt. In einem Ausführungsbeispiel ist die Membran nicht lösbar an dem Grundkörper der Filterplatte befestigt. Sie ist im radial äußeren Bereich an den Grundkörper angeschweißt.

Nachteilig an bekannten Filterplatten mit einer nicht-lösbar befestigten Membran ist es, dass überschüssiges Schweißmaterial in den Bereich zwischen dem Grundkörper und der Membran gelangen kann. Dieser Überschuss tritt unkontrolliert aus, so dass er die Bewegung der Membran stört. Hierdurch entsteht eine Schwachstelle der Verbindung der Membran mit dem Grundkörper. Bei hohen Drücken kann die Membran bei dieser Schwachstelle beschädigt werden. Außerdem kann es bei bekannten Filterplatten mit nicht-lösbar befestigter Membran passieren, dass das auf der Membran aufliegende Filtertuch die Einlauföffnung einer Ablaufbohrung für das Filtrat verstopft. Diese Verstopfungsgefahr ist insbesondere bei sehr hohen Filtrations- und Auspressdrücken groß. Gerade bei solchen Betriebsbedingungen wird jedoch eine Filterplatte mit nicht-lösbar befestigter Membran eingesetzt.

Der vorliegenden Erfindung liegt die Aufgabe zu Grunde, eine Filterplatte der Eingangs genannten Art bereitzustellen, bei der eine nicht-lösbare Verbindung zwischen der Membran und dem Grundkörper hergestellt ist, die dauerhaft hohen Drücken, die an der Membran anliegen, standhält.

Erfindungsgemäß wird diese Aufgabe durch eine Filterplatte mit den Merkmalen des Anspruchs 1 gelöst. Vorteilhafte Ausgestaltungen und Weiterbildungen ergeben sich aus den abhängigen Ansprüchen.

Die erfindungsgemäße Filterplatte ist dadurch gekennzeichnet, dass bei dem Grundkörper ein Einschnitt gebildet ist, der zumindest zum Teil das Befestigungselement der Membran aufnimmt, wobei zwischen einer von dem Einschnitt gebildeten Befestigungsfläche und einer von dem Befestigungselement der Membran gebildeten Befestigungsfläche die Schweißverbindung besteht.

Unter einer Schweißverbindung wird im Sinne der Erfindung verstanden, dass die Membran nicht-lösbar mit dem Grundkörper unter Anwendung von Wärme und/oder Druck verbunden wird. Die Schweißverbindung kann mit oder ohne Verwendung von Schweißzusatzwerkstoffen erzeugt werden. Durch die Schweißverbindung zwischen der Membran und dem Grundkörper wird eine dichte und dauerhaft feste Verbindung zwischen der Membran und dem Grundkörper hergestellt. Durch die Ausbildung des Einschnitts in dem Grundkörper, welcher das Befestigungselement der Membran aufnimmt, ist es möglich, einen besonders guten Formschluss zwischen der Membran und dem Grundkörper herzustellen, wobei vermieden wird, dass ein beim Schweißen entstehender Überschuss in die Druckkammer gelangt.

Unter einer nicht-lösbaren Befestigung der Membran an dem Grundkörper wird verstanden, dass die Membran nicht für den normalen Betrieb der Filterpresse ausgetauscht werden kann. Ein Lösen der Membran von dem Grundkörper führt insbesondere zu einer Beschädigung der Filterplatte. Die Membran oder eine andere Membran kann danach nicht mehr ohne weiteres mit der Filterplatte verbunden werden.

Gemäß einer Weiterbildung der erfindungsgemäßen Filterplatte bildet der Grundkörper randseitig einen Plattenrahmen und in der Mitte einen Mittelkörper, wobei sich der Grundkörper vom Plattenrahmen zum Mittelkörper hin verjüngt. Der Einschnitt ist im Übergangsbereich zwischen dem Plattenrahmen und dem Mittelkörper des Grundkörpers gebildet, insbesondere benachbart zu dem Abschnitt, der den Plattenrahmen bildet.

Gemäß einer Weiterbildung der erfindungsgemäßen Filterplatte vergrößert sich die Dicke des Grundkörpers von dem Mittelteil nach außen hin. Bei dem Einschnitt verkleinert sich die Dicke dann zunächst und vergrößert sich schließlich wieder bis zur Dicke bei dem Plattenrahmen, so dass benachbart zu dem Einschnitt ein Vorsprung gebildet ist. Dieser Vorsprung kann einen Abschnitt der Membran, der benachbart zu dem Befestigungselement ist, kontaktieren. Alternativ kann der Vorsprung einen schmalen Spalt zu diesem Abschnitt bilden, so dass bei einem Verbiegen der Membran insbesondere in Richtung einer zwischen dem Mittelteil des Grundkörpers und der Membran gebildeten Druckkammer der Abschnitt den Vorsprung kontaktiert und von diesem Vorsprung unterstützt wird. Auf diese Weise kann verhindert werden, dass die Membran im Betrieb der Filterpresse in der kritischen Biegezone beim Übergang vom Befestigungselement der Membran zu der elastischen Membran beschädigt wird, indem die Membran von dem Grundkörper unterstützt wird.

Bei der erfindungsgemäßen Filterplatte schließt zumindest ein erster Abschnitt der Befestigungsflächen einen Winkel mit der von der Filterplatte definierten Ebene ein, der größer als 90 Grad ist. Der Winkel ist insbesondere in einem Bereich von 92 Grad bis 100 Grad, bevorzugt in einem Bereich von 93 Grad bis 97 Grad und besonders bevorzugt ist dieser Winkel 95 Grad. Auf diese Weise wird bei dem Einschnitt eine schräge, nach außen geöffneter Schweißfläche bereitgestellt, so dass eine Kraftkomponente während der Abkühlung nach dem Schweißvorgang ausgeübt werden kann, die senkrecht zur Filterplattenebene wirkt. Damit können Lunker und undichte Stellen vermieden werden.

Gemäß einer weiteren Ausgestaltung der erfindungsgemäßen Filterplatte ist zumindest ein zweiter Abschnitt der Befestigungsflächen im Wesentlichen parallel zu der von der Filterplatte definierten Ebene ausgerichtet. Auf diese Weise können Befestigungsflächen gebildet werden, welche die Membran in zwei Richtungen an dem Grundkörper fixieren, die im Wesentlichen senkrecht aufeinander stehen. Hierdurch kann eine besonders haltbare Befestigung der Membran an den Grundkörper hergestellt werden.

Bei der erfindungsgemäßen Filterplatte schließt sich in dem Einschnitt zwischen dem Befestigungselement der Membran und dem Grundkörper ein Spalt an die Befestigungsflächen an, bei dem die Membran nicht an den Grundkörper angeschweißt ist. Dieser in dem Einschnitt ausgebildeter Spalt zwischen dem Befestigungselement der Membran und dem Grundkörper kann sich an die Befestigungsfläche anschließen, die parallel zu der von der Filterplatte definierten Ebene ausgerichtet ist. Alternativ oder zusätzlich kann der Spalt im Wesentlichen senkrecht zu der von der Filterplatte definierten Ebene ausgerichtet sein. Von dem Spalt kann vorteilhafterweise ein Überschuss eines Schweißmaterials aufgenommen werden, welcher bei der Schweißverbindung zwischen der Membran und dem Grundkörper entsteht. Dieser Überschuss tritt somit nicht in die Druckkammer aus.

Die Befestigungsflächen der Schweißverbindung zwischen der Membran und dem Grundkörper sind so ausgebildet, dass sie sich bei einer Fehlbedienung der Filterpresse lösen, wenn die Filterung begonnen wird, ohne dass der Schließdruck, welcher die Filterplatten zusammenpresst, anliegt. Bei bekannten angeschweißten Membranen ergibt sich nämlich das Problem, dass bei einer solchen Fehlbedienung die Verbindung zwischen der Membran und der Grundplatte nicht gelöst wird. Dies hat zur Folge, dass die Filterplatte aus der Filterpresse herausgeschossen wird. Bei der erfindungsgemäßen Filterplatte ist die Schweißverbindung so ausgebildet, dass sie sich löst, wenn ein hoher Filtrationsdruck anliegt, ohne dass die Filterpresse geschlossen ist. Bei geschlossener Filterpresse hingegen kann sich die Membran nicht von dem Grundkörper lösen.

Gemäß einer weiteren Ausgestaltung der erfindungsgemäßen Filterplatte ist bei dem Plattenrahmen des Grundkörpers eine Andruckfläche gebildet, die parallel zu der von der Filterplatte definierten Ebene ausgerichtet ist. Auf diese Andruckfläche ist der Schließdruck bzw. die Pressenschließkraft der Filterpresse ausübbar. Der Plattenrahmen bzw. der gesamte Grundkörper besteht somit aus einem Material, welches der Pressenschließkraft der Filterpresse standhält. Des Weiteren fluchtet das Befestigungselement der Membran bei der dem Einschnitt abgewandten Oberfläche mit der Andruckfläche des Plattenrahmens. Diese Oberfläche schließt sich insbesondere an die Andruckfläche des Plattenrahmens an. Auf diese Oberfläche wird jedoch keine Pressenschließkraft der Filterpresse ausgeübt. Das Material, aus dem die Membran besteht, muss somit nicht der Pressenschließkraft standhalten.

Gemäß einer bevorzugten Weiterbildung ist eine radial ausgerichtete Filtratablaufnut in der Oberfläche der Filterplatte gebildet, die sich von der Oberfläche des Befestigungselements der Membran zu der Andruckfläche des Plattenrahmens erstreckt. Die Filtratablaufnut geht somit in den Bereich über, auf welchen die Pressenschließkraft der Filterpresse wirkt. Hierdurch wird verhindert, dass die Öffnung des Filtratablaufs durch das Filtertuch verstopft wird, da das Filtertuch in dem Bereich, auf den die Pressenschließkraft der Filterpresse wirkt, unbeweglich ist. Des Weiteren wird vorteilhafter Weise die Schweißverbindung zwischen der Membran und dem Grundkörper durch die Ablaufnut nicht mittig durchbrochen.

Gemäß einer alternativen Weiterbildung ist eine schräg verlaufende Filtratablaufbohrung in der Filterplatte gebildet, die bei der Oberfläche der Filterplatte beginnt und die in einer zentralen Bohrung endet.

Bei der erfindungsgemäßen Filterplatte ist der Grundkörper insbesondere einstückig ausgebildet, d. h. der randseitige Plattenrahmen und der Mittelkörper bestehen aus demselben Material und sind aus einem Stück gefertigt. Der Grundkörper kann beispielsweise aus einem thermoplastischen Kunststoff wie Polypropylen, Polyethylen oder Polyvinylidenfluorid bestehen.

Die Membran besteht insbesondere aus einem Material, das mit dem Material des Grundkörpers verschweißbar ist. Es handelt sich insbesondere um ein mit dem Material des Grundkörpers verschweißbares Thermoplast. Die Härte des Materials kann sich damit über das gesamte mögliche Härtespektrum von Thermoplasten erstrecken. Die Shore-Härte der Membran ist beispielsweise in einem Bereich von 70 ShA bis 90 ShA.

Die Erfindung wird nun anhand eines Ausführungsbeispiels mit Bezug zu den Zeichnungen erläutert.
- Figur 1: zeigt eine Draufsicht eines Ausführungsbeispiels der erfindungsgemäßen Filterplatte,
- Figur 2: zeigt eine Teilschnittansicht des Ausführungsbeispiels der erfindungsgemäßen Filterplatte,
- Figur 3: zeigt eine Detailansicht der Fig. 2 und
- Figur 4: zeigt eine Detailansicht der Fig. 3.

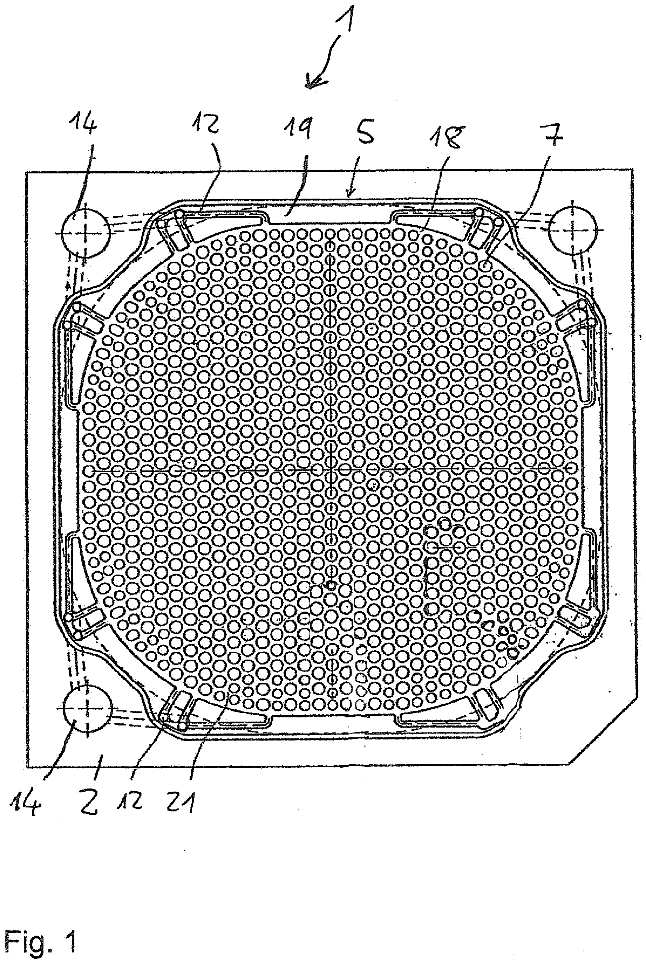

Fig. 1 zeigt die erfindungsgemäße Filterplatte 1 in Draufsicht. Die Filterplatte 1 umfasst einen Grundkörper 2, auf welchem eine Membran 5 nicht-lösbar befestigt ist. Die Membran 5 ist mittels eines Befestigungselements 6 an den Grundkörper 2 befestigt, wie es später im Detail erläutert wird. An der Membranoberfläche 18 ist eine Vielzahl von Noppen 7 als Abstützelemente für ein Filtertuch 10 angebracht. Die Noppenzwischenräume bilden Ablaufkanäle 21, durch welche das Filtrat während der Filtration ablaufen kann. An diese Ablaufkanäle 21 schließen sich entsprechende weiterführende Kanäle in Form von Filtratablaufnuten 12 und Öffnungen an, welche das Filtrat schließlich in die Bohrungen 14 leiten, welche die Filterplatte 1 senkrecht durchgreifen. Die Noppen 7 sind vom Membranrand 19 umgrenzt.

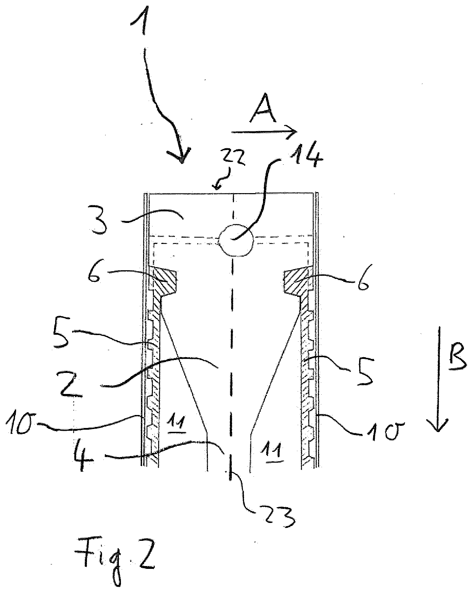

Die Figuren 2 bis 4 zeigen Teilschnittansichten durch die erfindungsgemäße Filterplatte 1, die bezogen auf ihre Mittellängsachse 23 spiegelsymmetrisch aufgebaut ist. An dem Grundkörper 2 sind auf den zwei gegenüberliegenden Seiten die Membranen 5 nicht-lösbar befestigt sind. Der Grundkörper 2 ist einteilig ausgebildet und besteht aus einem Kunststoff, insbesondere aus Polypropylen, Polyethylen oder Polyvinylidenfluorid. Die Membran 5 besteht aus einem Thermoplast, der mit dem Material des Grundkörpers 2 verschweißbar ist. Die Shore-Härte des Materials des Grundkörpers 2 ist z. B. größer als oder gleich 70 ShA. Die Shore-Härte der Membranen 5 ist insbesondere in einem Bereich von 70 ShA bis 90 ShA.

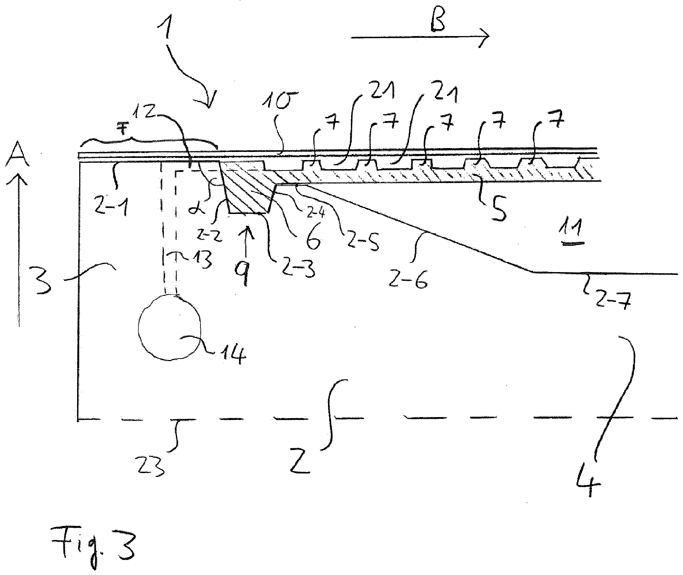

Wie insbesondere aus den Schnittansichten der Fig. 2 und 3 ersichtlich, bildet der Grundkörper 2 randseitig einen Plattenrahmen 3 und in der Mitte einen Mittelkörper 4. Ausgehend von der Stirnfläche 22 der Filterplatte 1 weist die Filterplatte 1 beim Plattenrahmen 3 die größte Dicke auf. In Richtung B in der Filterplattenebene verjüngt sich der Grundkörper 2 zur Mitte hin bis zum Mittelkörper 4.

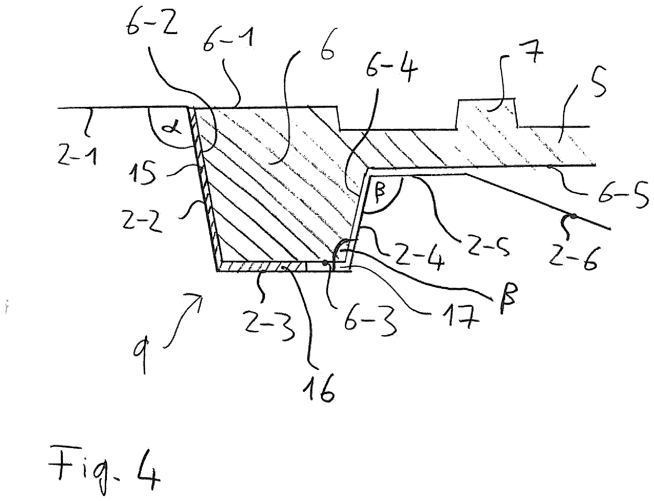

Wie in den Detailansichten der Fig. 3 und 4 erkennbar, ist in Richtung B der Filterplattenebene zunächst bei dem Plattenrahmen 3 ein Abschnitt 2-1 gebildet, der sich parallel zur Filterplattenebene erstreckt. Die von diesem Abschnitt 2-1 gebildete Fläche bildet eine Andruckfläche, auf welche beim Einsatz der Filterplatte 1 in einer Filterpresse die Pressenschließkraft wirkt. Bei dieser Andruckfläche liegt eine benachbarte Filterplatte an der Filterplatte 1 an, wobei zwischen den beiden Filterplatten zwei Filtertücher 10 eingeklemmt sein können.

An den Abschnitt 2-1 des Plattenrahmens 3 schließt sich ein Übergangsbereich zwischen dem Plattenrahmen 3 und dem Mittelkörper 4 an. In diesem Übergangsbereich ist ein Einschnitt 9 gebildet, in dem die Membran 5 befestigt ist, wie es später erläutert wird. Der Einschnitt 9 wird von den Abschnitten 2-2, 2-3 und 2-4 des Grundkörpers 2 gebildet. Der Abschnitt 2-2 schließt sich an den Abschnitt 2-1 an. Die von dem Abschnitt 2-1 gebildeten Andruckfläche schließt mit der von dem Abschnitt 2-2 gebildeten Befestigungsfläche einen Winkel α ein, wie es in den Fig. 3 und 4 dargestellt ist. Der Winkel α ist etwas größer als 90 Grad. Er liegt beispielsweise in einem Bereich von 92 Grad bis 100 Grad, bevorzugt in einem Bereich von 93 Grad bis 97 Grad. Bei dem vorliegenden Ausführungsbeispiel ist der Winkel 95 Grad. Die von dem Abschnitt 2-2 gebildete Fläche schließt damit mit einer Ebene, die senkrecht auf der Filterplattenebene steht, einen Winkel von 5 Grad ein. Die von dem Abschnitt 2-2 gebildete Fläche erstreckt sich somit schräg in Richtung der Dicke der Filterplatte 1 in diese hinein.

An den Abschnitt 2-2 schließt sich ein Abschnitt 2-3 an, der wieder parallel zur Filterplattenebene verläuft. An den Abschnitt 2-3 schließt sich ein Abschnitt 2-4 an, der einen Winkel β mit dem Abschnitt 2-3 einschließt, wie es in Fig. 4 gezeigt ist. Der Winkel β ist auch größer als 90 Grad. Im vorliegenden Ausführungsbeispiel sind die Winkel α und β identisch. Dies ist jedoch nicht notwendigerweise der Fall. Der Abschnitt 2-4 erstreckt sich wieder schräg in Richtung A der Dicke der Filterplatte 1 zur Oberfläche hin. Der Abschnitt 2-4 ist jedoch kürzer als der Abschnitt 2-2. Zur Oberfläche verbleibt in Richtung A der Dicke der Filterplatte 1 ein Abschnitt, welcher im Wesentlichen der Dicke der Membran 5 einschließlich der Noppen 7 entspricht.

An den Abschnitt 2-4 schließt sich ein Abschnitt 2-5 an, welcher wieder parallel zur Filterplattenebene ausgerichtet ist, so dass der Abschnitt 2-4 und der Abschnitt 2-5 auch den Winkel β einschließen.

An den Abschnitt 2-5 schließt sich der Abschnitt 2-6 an, bei dem der Grundkörper 2 sich wieder hinsichtlich seiner Dicke verjüngt, bis er beim Abschnitt 2-7 in den Mittelkörper 4 übergeht. Der Abschnitt 2-7 ist wieder parallel zur Filterplattenebene ausgerichtet.

Im Folgenden wird mit Bezug zu den Fig. 3 und 4 erläutert, wie die Membran 5 nicht-lösbar an dem Grundkörper 2 befestigt ist:
Bei der Membran 5 ist randseitig ein Befestigungselement 6 ausgebildet. Das Befestigungselement 6 umläuft die Membran 5 umfangsseitig. Das Befestigungselement 6 ist ähnlich einer umlaufenden Wulst ausgebildet. Die Form des Befestigungselements 6 unterscheidet sich jedoch von der Wulst einer herkömmlichen Membran, die lösbar an dem Grundkörper 2 einer Filterplatte 1 befestigt ist. Die Form des Befestigungselements 6 ist zumindest zum Teil an die Form des Einschnitts 9 des Grundkörpers 2 angepasst, so dass der Einschnitt 9 zumindest zum Teil das Befestigungselement 6 der Membran 5 aufnimmt. Dabei sind zwischen dem Befestigungselement 6 und dem Einschnitt 9 Befestigungsflächen gebildet, wie es am besten in Fig. 4 dargestellt ist.

Das Befestigungselement 6 weist einen Abschnitt 6-2 auf, der eine Fläche bildet, welche zu der von dem Abschnitt 2-2 des Grundkörpers 2 gebildeten Fläche korrespondiert. Wenn die Membran 5 parallel zu der von der Filterplatte 1 gebildeten Ebene ausgerichtet ist, ist die von dem Abschnitt 6-2 gebildete Fläche parallel zu der von dem Abschnitt 2-2 gebildeten Fläche ausgerichtet. Sie liegt insbesondere an der von dem Abschnitt 2-2 gebildeten Fläche an, so dass das Befestigungselement 6 der Membran 5 bei dieser Befestigungsfläche eine Schweißverbindung 15 mit der von dem Abschnitt 2-2 gebildeten Fläche eingehen kann. Die Länge des Abschnitts 6-2 entspricht im Wesentlichen der Länge des Abschnitts 2-2 des Grundkörpers 2.

Wie bei dem Einschnitt 9 schließt sich an den Abschnitt 6-2 ein Abschnitt 6-3 an, der zu dem Abschnitt 2-3 des Grundkörpers 2 korrespondiert. Der Abschnitt 6-3 ist somit parallel zu der Filterplattenebene und der Membranebene ausgerichtet. An den Abschnitt 6-3 schließt sich der Abschnitt 6-4 an, der zu dem Abschnitt 2-4 des Grundkörpers 2 korrespondiert. Daran schließt sich wiederum der Abschnitt 6-5 an, welcher parallel zu dem Abschnitt 2-5 des Grundkörpers 2 ausgerichtet ist. Der Abschnitt 6-5 stellt die Unterseite der Membran 5 dar, die von der Seite der Membran 5 abgewandt ist, auf welcher die Noppen 7 gebildet sind. Von dieser Unterseite 6-5 der Membran 5 und den Abschnitten 2-6 und 2-7 des Grundkörpers 2 wird eine Druckkammer 11 gebildet. Die Druckkammer 11 kann durch eine von außen an der Stirnseite 22 des Grundkörpers 2 angebrachte Anschlussbuchse mittels eines Einzelanschlusses an die Sammelleitung des Druckmediums angeschlossen werden. Im unbeaufschlagten Ruhezustand ist die Unterseite 6-5 der Membran 5 im Wesentlichen parallel zu der Filterplattenebene ausgerichtet. Im beaufschlagten Zustand, d. h. wenn das Druckmedium in der Druckkammer 11 einen Druck auf die Membran 5 ausübt, wird die Membran 5 in Richtung der Filtrationskammer verformt, welche auf der Seite der Membran 5 gebildet ist, auf der die Noppen 7 ausgebildet sind. Auf diese Weise wird ein Druck auf den Filterkuchen in der Filtrationskammer ausgeübt.

Bei der von dem Abschnitt 6-2 gebildeten Fläche kann eine weitere Schweißverbindung 16 mit der von dem Abschnitt 2-3 des Grundkörpers 2 gebildeten Fläche gebildet werden. Diese Schweißverbindung 16 erstreckt sich nicht über die gesamte Breite der Abschnitte 2-3 bzw. 6-3, sondern nur über einen Teil, so dass zwischen dem Befestigungselement 6 der Membran 5 und dem Grundkörper 2 ein Spalt 17 gebildet werden kann. Dieser Spalt 17 dient der Aufnahme eines etwaigen Überschusses beim Herstellen der Schweißverbindung 16. Der Spalt 17 kann nur in dem Bereich zwischen den Flächen der Abschnitte 6-3 und 2-3 ausgebildet sein. Es ist jedoch auch möglich, dass sich der Spalt 17 so fortsetzt, dass er zwischen den von den Abschnitten 6-4 und 2-4 gebildeten Flächen ausgebildet werden kann.

Um die Schweißverbindung 15, 16 zwischen dem Einschnitt 9 des Grundkörpers 2 und dem Befestigungselement 6 der Membran 5 herzustellen, wird das Befestigungselement 6 in den Bereichen erwärmt, in denen die Schweißverbindung ausgebildet werden soll. Daraufhin wird das Befestigungselement 6 passgenau in den Einschnitt 9 eingesetzt und es wird ein Druck senkrecht zur Filterplattenebene in einer Richtung entgegen dem Pfeil A ausgeübt. Diese Druckrichtung weist durch die schräge Ausbildung der Abschnitte 2-2 und 6-2 eine Komponente auf, die senkrecht zu den von diesen Abschnitten 2-2 und 6-2 gebildeten Flächen ausgerichtet ist, so dass die von dem Abschnitt 6-2 gebildete Fläche des Befestigungselements 6 an die von dem Abschnitt 2-2 gebildete Fläche angedrückt wird. Ein während des Herstellens der Schweißverbindung 15, 16 möglicherweise auftretender Überschuss an den Randstellen der Schweißverbindung 15, 16 kann zum einen von dem Spalt 17 aufgenommen werden. Zum andern kann er bei der Oberseite der Filterplatte 1 austreten, wo er einfach entfernt werden kann. Ein etwaiger Überschuss des Schweißmaterials tritt somit nicht unkontrolliert in die Druckkammer 11 aus.

Durch die Schweißverbindung 15, 16 zwischen dem Befestigungselement 6 der Membran 5 und dem Grundkörper 2 bei dem Einschnitt 9 wird eine dichte, nicht-lösbare Verbindung zwischen der Membran 5 und dem Grundkörper 2 hergestellt.

Nachdem die Membran 5 in dem Einschnitt 9 des Grundkörpers 2 nicht-lösbar durch die Schweißverbindung 15, 16 befestigt ist, wird bei dem Befestigungselement 6 von dem Abschnitt 6-1 eine Oberfläche gebildet, welche mit der Andruckfläche 2-1 des Grundkörpers 2 fluchtet. Die von dem Abschnitt 6-1 gebildete Oberfläche befindet sich jedoch in einem Bereich, in dem bei einem Einsatz der Filterplatte 1 in einer Filterpresse keine Pressenschließkraft wirkt. Dieser Bereich ist in Fig. 3 mit F bezeichnet. Die Pressenschließkraft drückt somit nur die einzelnen Plattenrahmen 3 der Filterplatten 1 aneinander, wirkt jedoch nicht auf die Oberfläche des Befestigungselements 6 der Membran 5.

Wenn die Membran 5 an dem Grundkörper 2 befestigt ist, liegt die von dem Abschnitt 2-5 gebildete Fläche des Grundkörpers 2 an der Unterseite 6-5 der Membran 5 an oder es ist ein schmaler Spalt zwischen der Unterseite 6-5 der Membran 5 und der von dem Abschnitt 2-5 gebildeten Fläche des Grundkörpers 2 gebildet. Auf diese Weise wird von dem Grundkörper 2 bei dem Abschnitt 2-5 ein Vorsprung gebildet, der die Membran 5 bei der Unterseite 6-5 in einem Bereich unterstützen kann, der benachbart zu dem Befestigungselement 6 ist. Bei einer Verformung der Membran 5 ist dieser Bereich besonders anfällig für einen etwaigen Bruch der Membran 5. Durch die Ausbildung der Befestigung der Membran 5 an dem Grundkörper 2 der Filterplatte 1 kann die Membran 5 im Betrieb der Filterpresse durch diesen Vorsprung vor einem Bruch geschützt werden.

Auf der Seite der Membran 5, bei welcher die Noppen 7 gebildet sind, kann ein Filtertuch 10 auf an sich bekannte Weise an der Filterplatte 1 befestigt werden. Das Filtertuch kann beispielsweise bei geschlossener Filterpresse zwischen zwei Filterplatten 1 eingeklemmt sein. Ferner kann das Filtertuch 10 in einer weiteren (nicht gezeigten) Nut in dem Plattenrahmen 3 des Grundkörpers 2 befestigt sein. Die Befestigung des Filtertuchs 10 erfolgt insbesondere weiter außen am Rand als die Befestigung der Membran 5.

Wie es vorstehend erläutert wurde, sind zwischen den Noppen 7 der Membran 5 Ablaufkanäle 21 für das Filtrat gebildet. Randseitig muss das Filtrat abgeführt werden. Hierfür ist auf der Oberfläche des Befestigungselements 6 bei dem Abschnitt 6-1 eine Filtratablaufnut 12 ausgebildet, welche in den Abschnitt 2-1 des Grundkörpers 2 übergeht. Die Filtratablaufnut 12 erstreckt sich somit radial nach außen. Sie geht schließlich in eine Bohrung 13 über, welche in der senkrecht dazu verlaufenden Bohrung 14 mündet, über welche das Filtrat aller Filterplatten der Filterpresse abgeführt wird. Der Durchmesser der Filtratablaufnut 12 ist in einem Bereich von etwa 4 mm bis 8 mm, insbesondere 6 mm. Die Filtratablaufnut 12 befindet sich in einem Bereich F, in welchem die Pressenschließkraft der Filterpresse wirkt. Auf diese Weise wird verhindert, dass das Filtertuch 10 die Filtratablaufnut 12 verschließt. Das Filtertuch 11 wird nämlich durch die Pressenschließkraft auf der Oberfläche der Filterplatte 1 bei dem Filtratablaufkanal 12 gehalten.

Gemäß einer alternativen Ausgestaltung wird das Filtrat über eine schräg verlaufende Filtratablaufbohrung abgeführt, die bei der Oberfläche der Filterplatte beginnt, insbesondere bei einem Ablaufkanal 21, der benachbart zu dem Befestigungselement 6 ist, und die in der Bohrung 14 endet.

### BEZUGSZEICHENLISTE

- 1: Filterplatte
- 2: Grundkörper
- 3: Plattenrahmen
- 4: Mittelkörper des Grundkörpers 2
- 5: Membran
- 6: Befestigungselement
- 7: Noppen
- 9: Einschnitt
- 10: Filtertuch
- 11: Druckkammer
- 12: Filtratablaufkanal
- 13: Bohrung
- 14: Bohrung
- 15: Schweißverbindung
- 16: Schweißverbindung
- 17: Spalt
- 18: Ablaufkanäle
- 19: Membranrand
- 21: Ablaufkanäle
- 22: Stirnseite
- 23: Mittelachse

## Patentansprüche

1. Filterplatte (1) für eine Filterpresse mit einem Grundkörper (2) und einer Membran (5), bei der randseitig ein Befestigungselement (6) ausgebildet ist, mittels welchem die Membran (5) nicht-lösbar mittels einer Schweißverbindung (15, 16) an dem Grundkörper (2) befestigt ist,
**dadurch gekennzeichnet,**
**dass** bei dem Grundkörper (2) ein Einschnitt (9) gebildet ist, der zumindest zum Teil das Befestigungselement (6) der Membran (5) aufnimmt, wobei zwischen einer von dem Einschnitt (9) gebildeten Befestigungsfläche (2-2, 2-3) und einer von dem Befestigungselement (6) der Membran (5) gebildeten Befestigungsfläche (6-2, 6-3) die Schweißverbindung (15, 16) besteht,
**dass** zumindest ein erster Abschnitt (2-2, 6-2) der Befestigungsflächen einen Winkel mit der von der Filterplatte (1) definierten Ebene einschließt, der größer als 90 Grad ist, und dass sich in dem Einschnitt (9) zwischen dem Befestigungselement (6) der Membran (5) und dem Grundkörper (2) ein Spalt (17) an die Befestigungsflächen anschließt, bei dem die Membran (5) nicht an den Grundkörper (2) angeschweißt ist.

2. Filterplatte (1) nach Anspruch 1,
**dadurch gekennzeichnet,**
**dass** der Grundkörper (2) randseitig einen Plattenrahmen (3) und in der Mitte einen Mittelkörper (4) bildet, wobei sich der Grundkörper (2) vom Plattenrahmen (3) zum Mittelkörper (4) hin verjüngt, und dass der Einschnitt (9) im Übergangsbereich zwischen dem Plattenrahmen (3) und dem Mittelkörper (4) des Grundkörpers (2) gebildet ist.

3. Filterplatte (1) nach Anspruch 1 oder 2,
**dadurch gekennzeichnet,**
**dass** sich die Dicke des Grundkörpers (2) von dem Mittelteil (4) nach außen hin vergrößert, bei dem Einschnitt (9) zunächst verkleinert und schließlich wieder bis zur Dicke bei dem Plattenrahmen (3) vergrößert, so dass benachbart zu dem Einschnitt (9) ein Vorsprung gebildet ist.

4. Filterplatte (1) nach einem der vorhergehenden Ansprüche,
**dadurch gekennzeichnet,**
**dass** der Vorsprung einen Abschnitt der Membran (5), der benachbart zu dem Befestigungselement (6) ist, kontaktiert oder einen schmalen Spalt zu diesem Abschnitt bildet, so dass bei einem Verbiegen der Membran (5) dieser Abschnitt den Vorsprung kontaktiert und von diesem Vorsprung unterstützt wird.

5. Filterplatte (1) nach Anspruch 1,
**dadurch gekennzeichnet,**
**dass** der erste Abschnitt (2-2, 6-2) der Befestigungsflächen einen Winkel mit der von der Filterplatte (1) definierten Ebene einschließt, der in einem Bereich von 92 Grad bis 100 Grad liegt.

6. Filterplatte (1) nach einem der vorhergehenden Ansprüche,
**dadurch gekennzeichnet,**
**dass** zumindest ein zweiter Abschnitt (2-3, 6-3) der Befestigungsflächen im Wesentlichen parallel zu der von der Filterplatte (1) definierten Ebene ausgerichtet ist.

7. Filterplatte (1) nach einem der vorhergehenden Ansprüche,
**dadurch gekennzeichnet,**
**dass** bei dem Plattenrahmen (3) des Grundkörpers (2) eine Andruckfläche (2-1) gebildet ist, die parallel zu der von der Filterplatte (1) definierten Ebene ausgerichtet ist, auf welche die Pressenschließkraft der Filterpresse ausübbar ist, und dass das Befestigungselement (6) der Membran (5) bei der dem Einschnitt (9) abgewandten Oberfläche (6-1) mit der Andruckfläche (2-1) des Plattenrahmens (3) fluchtet.

8. Filterplatte (1) nach Anspruch 7,
**dadurch gekennzeichnet,**
**dass** eine radial ausgerichtete Filtratablaufnut (12) in der Oberfläche der Filterplatte (1) gebildet ist, die sich von dem Befestigungselements (6) der Membran (5) zu der Andruckfläche (2-1) des Plattenrahmens (3) erstreckt.

9. Filterplatte (1) nach Anspruch 7,
**dadurch gekennzeichnet,**
**dass** eine schräg verlaufende Filtratablaufbohrung in der Filterplatte (1) gebildet ist, die bei der Oberfläche der Filterplatte (1) beginnt und die in einer zentralen Bohrung (14) endet.

10. Filterplatte (1) nach einem der vorhergehenden Ansprüche,
**dadurch gekennzeichnet,**
**dass** die Membran aus einem Thermoplast besteht, das mit dem Material des Grundkörpers verschweißbar ist.

## Claims

1. A filter plate (1) for a filter press, having a main body (2) and a diaphragm (5), on the periphery of which there is formed a fastening element (6), by means of which the diaphragm (5) is fastened non-detachably by means of a welded connection (15, 16) to the main body (2),
**characterized**
**in that** an indentation (9) is formed in the main body (2), said indentation (9) at least partially accommodating the fastening element (6) of the diaphragm (5), there being the welded connection (15, 16) between a fastening surface (2-2, 2-3) formed by the indentation (9) and a fastening surface (6-2, 6-3) formed by the fastening element (6) of the diaphragm (5),
**in that** at least a first section (2-2, 6-2) of the fastening surfaces encloses an angle of greater than 90 degrees with the plane defined by the filter plate (1) and
**in that** a gap (17) adjoins the fastening surfaces in the indentation (9) between the fastening element (6) of the diaphragm (5) and the main body (2), the diaphragm (5) not being welded to the main body (2) at said gap (17).

2. The filter plate (1) as claimed in claim 1,
**characterized**
**in that** the main body (2) forms a plate frame (3) peripherally and a central body (4) in the center, wherein the main body (2) narrows from the plate frame (3) toward the central body (4), and in that the indentation (9) is formed in the transition region between the plate frame (3) and the central body (4) of the main body (2).

3. The filter plate (1) as claimed in claim 1 or 2,
**characterized**
**in that** the thickness of the main body (2) increases outwardly from the central part (4), initially decreases at the indentation (9) and finally increases again up to the thickness at the plate frame (3), such that a protrusion is formed next to the indentation (9).

4. The filter plate (1) as claimed in one of the preceding claims,
**characterized**
**in that** the protrusion comes into contact with a section of the diaphragm (5) that is adjacent to the fastening element (6), or forms a narrow gap with respect to this section, such that when the diaphragm (5) bends, this section comes into contact with the protrusion and is supported by this protrusion.

5. The filter plate (1) as claimed in claim 1,
**characterized**
**in that** the first section (2-2, 6-2) of the fastening surfaces encloses an angle in a range from 92 degrees to 100 degrees with the plane defined by the filter plate (1).

6. The filter plate (1) as claimed in one of the preceding claims,
**characterized**
**in that** at least a second section (2-3, 6-3) of the fastening surfaces is oriented substantially parallel to the plane defined by the filter plate (1).

7. The filter plate (1) as claimed in one of the preceding claims,
**characterized**
**in that** a pressure surface (2-1) is formed on the plate frame (3) of the main body (2), said pressure surface (2-1) being oriented parallel to the plane defined by the filter plate (1), it being possible for the press closing force of the filter press to be exerted thereon, and in that the fastening element (6) of the diaphragm (5) is flush with the pressure surface (2-1) of the plate frame (3) at the surface (6-1) facing away from the indentation (9).

8. The filter plate (1) as claimed in claim 7,
**characterized**
**in that** a radially oriented filtrate drainage groove (12) is formed in the surface of the filter plate (1), which extends from the fastening element (6) of the diaphragm (5) to the pressure surface (2-1) of the plate frame (3).

9. The filter plate (1) as claimed in claim 7,
**characterized**
**in that** an obliquely extending filtrate drainage bore is formed in the filter plate (1), which begins at the surface of the filter plate (1) and ends in a central bore (14).

10. The filter plate (1) as claimed in one of the preceding claims,
**characterized**
**in that** the diaphragm consists of a thermoplastic which is fusible with the material of the main body.

## Revendications

1. Plaque filtrante (1) pour un filtre-presse avec un corps de base (2) et une membrane (5), dans laquelle un élément de fixation (6) est réalisé sur le bord, au moyen duquel la membrane (5) est fixée de façon non séparable au corps de base (2) au moyen d'une liaison soudée (15, 16), **caractérisée en ce qu'**une entaille (9) est formée dans le corps de base (2), qui contient au moins en partie l'élément de fixation (6) de la membrane (5), dans laquelle la liaison soudée (15, 16) existe entre une face de fixation (2-2, 2-3) formée par l'entaille (9) et une face de fixation (6-2, 6-3) formée par l'élément de fixation (6) de la membrane (5), **en ce qu'**au moins une première partie (2-2, 6-2) des faces de fixation forme avec un plan défini par la plaque filtrante (1) un angle, qui est plus grand que 90 degrés, et **en ce que**, dans l'entaille (9) une fente (17) entre l'élément de fixation (6) de la membrane (5) et le corps de base (2) se raccorde aux faces de fixation, dans laquelle la membrane (5) n'est pas soudée au corps de base (2).

2. Plaque filtrante (1) selon la revendication 1, **caractérisée en ce que** le corps de base (2) forme sur le bord un cadre de plaque (3) et au milieu un corps central (4), dans laquelle le corps de base (2) s'amincit depuis le cadre de plaque (3) en direction du corps central (4), et **en ce que** l'entaille (9) est formée dans la région de transition entre le cadre de plaque (3) et le corps central (4) du corps de base (2).

3. Plaque filtrante (1) selon la revendication 1 ou 2, **caractérisée en ce que** l'épaisseur du corps de base (2) augmente depuis la partie centrale (4) en direction de l'extérieur, diminue d'abord près de l'entaille (9) et finalement augmente de nouveau jusqu'à l'épaisseur du cadre de plaque (3), de telle manière qu'une saillie soit formée au voisinage de l'entaille (9).

4. Plaque filtrante (1) selon l'une quelconque des revendications précédentes, **caractérisée en ce que** la saillie touche une partie de la membrane (5), qui est proche de l'élément de fixation (6), ou forme une fente étroite avec cette partie, de telle manière que lors d'une courbure de la membrane (5) cette partie touche la saillie et soit soutenue par cette saillie.

5. Plaque filtrante (1) selon la revendication 1, **caractérisée en ce que** la première partie (2-2, 6-2) des faces de fixation forme avec le plan défini par la plaque filtrante (1) un angle qui se situe dans la plage de 92 degrés à 100 degrés.

6. Plaque filtrante (1) selon l'une quelconque des revendications précédentes, **caractérisée en ce qu'**au moins une deuxième partie (2-3, 6-3) des faces de fixation est orientée essentiellement parallèlement au plan défini par la plaque filtrante (1).

7. Plaque filtrante (1) selon l'une quelconque des revendications précédentes, **caractérisée en ce qu'**une face de pression (2-1) est formée près du cadre de plaque (3) du corps de base (2) et est orientée parallèlement au plan défini par la plaque filtrante (1), sur laquelle la force de fermeture de la presse du filtre-presse peut être exercée, et **en ce que** l'élément de fixation (6) de la membrane (5) s'aligne avec la face de pression (2-1) du cadre de plaque (3) près de la surface (6-1) détournée de l'entaille (9).

8. Plaque filtrante (1) selon la revendication 7, **caractérisée en ce qu'**une rainure d'écoulement de filtrat (12) orientée radialement est formée dans la surface de la plaque filtrante (1), et s'étend depuis l'élément de fixation (6) de la membrane (5) jusqu'à la face de pression (2-1) du cadre de plaque (3).

9. Plaque filtrante (1) selon la revendication 7, **caractérisée en ce qu'**un trou d'écoulement de filtrat orienté en oblique est formé dans la plaque filtrante (1), et commence près de la surface de la plaque filtrante (1) et se termine dans un trou central (14).

10. Plaque filtrante (1) selon l'une quelconque des revendications précédentes, **caractérisée en ce que** la membrane est composée d'un thermoplastique, qui peut être soudé au matériau du corps de base.
